# FASCICULE DE BREVET EUROPEEN

(11) **EP 2 530 298 B1**
(45) Date de publication et mention de la délivrance du brevet: **25.12.2013**
(21) Numéro de dépôt: 12170134.6
(22) Date de dépôt: 31.05.2012
(51) Int. Cl.: F03B 3/12, F04D 13/06

(54) **Hélice pour machine hydraulique, machine hydraulique équipée d'une telle hélice et méthode d'assemblage d'une telle hélice**
Propeller für Hydraulikmaschine, mit einem solchen Propeller ausgestattete Hydraulikmaschine und Verfahren für die Montage eines solchen Propellers
Propeller for a hydraulic machine, hydraulic machine provided with such a propeller and method for assembling such a propeller

(30) Priorité: 01.06.2011 FR 1154827
(43) Date de publication de la demande: 05.12.2012
(73) Titulaire: ALSTOM Renewable Technologies, 38100 Grenoble (FR)
(72) Inventeur: Sabourin, Michel, Sorel, Québec, J3R 2R4 (CA); Beaulieu, Sébastien, Sorel, Québec, J3R 5P7 (CA)
(74) Mandataire: Pesce, Michele

(56) Documents cités:
- FR-A- 1 261 800
- FR-A5- 2 049 789
- JP-A- 57 005 561
- US-A- 3 973 876

## Description

La présente invention concerne une hélice pour machine hydraulique, notamment de type turbine, ainsi qu'une machine hydraulique équipée d'une telle hélice et une méthode d'assemblage d'une telle hélice.

Au sens de la présente invention, une machine hydraulique peut être une turbine, une pompe ou une turbine-pompe utilisée, par exemple, dans une usine de production d'hydro-électricité. L'hélice de l'invention est destinée à être traversée par un écoulement forcé d'eau. Dans ce qui suit, l'amont désigne le côté d'un écoulement qui est en hauteur par rapport à l'aval de cet écoulement. Un tel écoulement de l'amont vers l'aval a pour effet d'entraîner l'hélice en rotation, lorsque la machine est une turbine. Lorsque la machine est une pompe, la rotation de l'hélice, dans le sens contraire, entraine un tel écoulement de l'aval vers l'amont.

Certaines hélices de machine hydraulique ont un diamètre supérieur à 6 mètres. Il est peu aisé, voire impossible, de transporter de telles hélices par voie terrestre, maritime ou aérienne sur leur site d'utilisation compte tenu des contraintes posées par les infrastructures de transport. Pour pouvoir transporter de telles hélices, il est connu de les acheminer sur site en plusieurs pièces détachées qui sont assemblées sur site. Par exemple, les pales sont soudées sur site à un moyeu central de l'hélice. Cependant, un tel assemblage par soudage est relativement long et fastidieux, compte tenu du grand nombre de soudures à effectuer et du matériel de soudage à utiliser. De plus, une fois que les pales sont soudées sur le moyeu, la périphérie des pales de l'hélice doit être usinée pour ajuster les dimensions du diamètre externe de l'hélice, notamment en vue de contrôler la dimension de l'espacement entre un carénage externe de l'hélice et l'extrémité des pales. Ces opérations d'usinage sont peu aisées à réaliser sur site. De plus, de manière classique, une hélice ainsi assemblée doit subir un traitement thermique pour améliorer ses caractéristiques mécaniques, ce qui nécessite également du matériel encombrant qu'il faut transporter sur site.

Pour remédier à ces inconvénients, il est connu de fabriquer une hélice pour machine hydraulique en assemblant entre eux plusieurs secteurs qui se composent chacun d'une portion de moyeu et d'une pale. Ainsi, le document CA-A-874235 propose d'assembler entre eux de tels secteurs au moyen de bagues disposées au niveau des deux extrémités axiales du moyeu. Ces bagues constituent des frettes : elles sont chauffées, ce qui provoque leur dilatation et permet de les mettre en place autour des secteurs disposés les uns contre les autres. Une fois en place, les bagues refroidissent, ce qui provoque un rétrécissement de leur diamètre de sorte que les bagues maintiennent fixement les différents secteurs en configuration assemblée.

A température ambiante, lorsqu'une bague n'est pas mise en place autour du moyeu, le diamètre interne de la bague est inférieur au diamètre du moyeu mesuré à l'endroit où il est prévu de mettre en place cette bague, de manière à créer un effort de serrage. L'intensité de cet effort de serrage dépend de cette différence de diamètre entre le diamètre interne de la bague et le diamètre externe du moyeu. Plus cette différence de diamètre est grande, plus l'effort de serrage est important.

L'effort de serrage est également dépendant de la section transversale de la bague et des propriétés mécaniques des matériaux utilisés, notamment leur rigidité.

Lors du chauffage d'une bague, l'élargissement maximal de son diamètre interne dépend de la température maximale à laquelle elle peut être chauffée sans en modifier les propriétés mécaniques. Or, il est nécessaire, lors du chauffage de la bague, qu'elle se dilate suffisamment pour obtenir un jeu entre le diamètre interne de la bague et le moyeu, de manière à permettre la mise en place de la bague autour des secteurs. D'autre part, plus le diamètre de la bague est petit et moins la dilatation de la bague est importante.

Lorsque le diamètre du moyeu est faible, l'utilisation d'une bague frettée n'est pas appropriée, en particulier si on souhaite obtenir un effort de serrage conséquent ainsi qu'un jeu suffisant pour permettre la mise en place de la bague.

De plus, dans le cas des moyeux de petit diamètre, la géométrie de l'extrémité aval du moyeu ne permet pas en général l'installation d'une frette, pour des problèmes d'encombrement.

US-A-3973876 divulgue également une hélice de machine hydraulique fabriquée à partir de plusieurs secteurs qui se composent chacun d'une portion de moyeu et d'une pale. Plusieurs tendeurs à vis sont disposés à l'intérieur du moyeu qui est creux et sont utilisés pour l'assemblage de deux secteurs opposés au moyeu. Des bagues frettées, disposées au niveau de chaque extrémité du moyeu, consolident l'assemblage. Cette solution n'est pas adaptée lorsque le nombre de pales est impair. De plus, les bagues frettées ne conviennent pas pour des moyeux de petit diamètre. Par conséquent, l'encombrement du moyeu est relativement important, ce qui pénalise le rendement de l'hélice et son comportement hydraulique.

Les documents US-A-2009/0092495 et US-A-2009/0092496 divulguent chacun une hélice pour machine hydraulique comprenant un moyeu central monobloc sur lequel sont assemblées des pales. Chaque pale est solidaire d'un flasque et la surface externe du moyeu est pourvue de zones spécialement adaptées pour recevoir les flasques. Des boulons sont utilisés pour fixer les flasques au moyeu. Le diamètre du moyeu doit être relativement élevé pour permettre l'assemblage des flasques. Dans certains cas, le diamètre du moyeu est augmenté uniquement dans le but de permettre l'assemblage des flasques, ce qui implique d'augmenter les dimensions de toute la machine hydraulique. Ainsi, cette solution est coûteuse. De plus, elle nécessite une quantité considérable d'opérations d'usinage du moyeu et des pales, ce qui contribue également à accroître le coût d'une telle hélice.

C'est à ces inconvénients qu'entend plus particulièrement remédier l'invention en proposant une hélice pour machine hydraulique facilement transportable et dont l'assemblage sur site est aisé. Un autre but de l'invention est de proposer une hélice dont le diamètre du moyeu central est variable et décroit de l'amont vers l'aval, avec un diamètre du moyeu relativement faible au niveau de l'extrémité de petit diamètre.

A cet effet, l'invention a pour objet une hélice pour machine hydraulique, destinée à être traversée par un écoulement, l'hélice comportant un moyeu s'étendant le long d'un axe de rotation de l'hélice et des pales s'étendant à partir du moyeu. L'hélice est composée de plusieurs secteurs comportant chacun un corps qui, une fois les secteurs assemblés, constituent ensemble le moyeu. Chaque pale est solidaire du corps d'un secteur. Les secteurs sont assemblés entre eux pour former l'hélice au moyen d'au moins une bague frettée qui est mise en place autour des corps des secteurs. Le moyeu est creux, chaque secteur comprend une paroi latérale et une projection qui est solidaire de la paroi latérale et qui fait saillie vers l'intérieur du moyeu, perpendiculairement à l'axe. Les secteurs sont en outre assemblés entre eux pour former l'hélice au moyen d'au moins une rondelle assemblée à la projection de chaque secteur, , à l'intérieur du moyeu, au moyen d'éléments de fixation rapportés.

Grâce à l'invention, l'assemblage des différents secteurs est réalisé à la fois au moyen de la bague frettée et de l'élément d'assemblage. L'hélice de l'invention est particulièrement adaptée aux moyeux globalement coniques dont l'extrémité de petit diamètre présente un diamètre relativement faible, voire nul, car, dans ce cas, la bague est frettée sur l'extrémité de plus grand diamètre du moyeu qui, la plupart du temps, est de diamètre suffisamment grand pour permettre un frettage efficace. Cela permet de réduire l'encombrement du moyeu et de l'hélice et d'améliorer son rendement et son comportement hydraulique. L'élément d'assemblage est fixé à l'intérieur du moyeu de sorte qu'il n'est pas nécessaire d'adapter la surface radiale externe du moyeu, c'est-à-dire la surface hydraulique qui est mouillée en service, pour la mise en place d'éléments de fixation. En outre, un tel assemblage est relativement aisé à effectuer sur site et ne nécessite pas le transport de matériel élaboré.

Selon des aspects avantageux mais non obligatoires de l'invention, une telle hélice peut incorporer une ou plusieurs des caractéristiques suivantes, prises dans toute combinaison techniquement admissible :
- Le moyeu est globalement tronconique et présente une première extrémité axiale, tournée vers l'amont de l'écoulement, et une seconde extrémité axiale, tournée vers l'aval de l'écoulement, dont la dimension radiale externe maximale, mesurée perpendiculairement à l'axe, est inférieure à la dimension radiale externe maximale de la première extrémité axiale.
- La bague est frettée au niveau de la première extrémité axiale du moyeu.
- La première extrémité axiale du moyeu est prolongée vers l'axe par une paroi qui comprend une rainure de réception de la bague, la rainure s'étendant dans un plan perpendiculaire à l'axe.
- Les éléments de fixation sont constitués par des boulons et/ou des goupilles.
- Les secteurs sont monobloc, notamment fabriqués par moulage.
- Les secteurs sont fabriqués en assemblant une des pales à un des corps, notamment par soudage.

L'invention concerne également une machine hydraulique équipée d'une telle hélice.

Enfin, l'invention concerne une méthode d'assemblage d'une telle hélice, qui comprend des étapes dans lesquelles:
- la bague est frettée autour du corps de chaque secteur,
- Au moins une rondelle est assemblée à la projection de chaque secteur.

Avantageusement, au moins une rondelle est assemblée à la projection de chaque secteur au moyen d'éléments de fixation rapportés, notamment des boulons et/ou des goupilles.

L'invention sera mieux comprise et d'autres avantages de celle-ci apparaîtront plus clairement à la lumière de la description qui va suivre d'une hélice pour machine hydraulique, donnée uniquement à titre d'exemple et faite en référence aux dessins annexés dans lesquels :
- la figure 1 est une vue de dessus d'une hélice conforme à l'invention;
- la figure 2 est une coupe, à plus grande échelle, selon la ligne II-II à la figure 1; et
- la figure 3 est une vue en perspective d'un des secteurs à partir desquels est fabriquée l'hélice de la figure 1, d'une partie d'une bague et d'une partie d'une rondelle appartenant à l'hélice des figures 1 et 2.

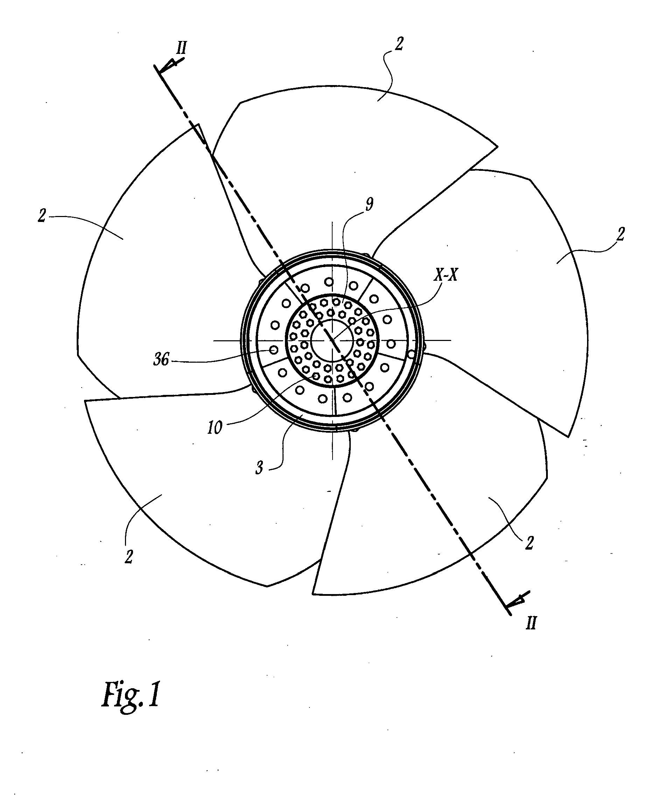

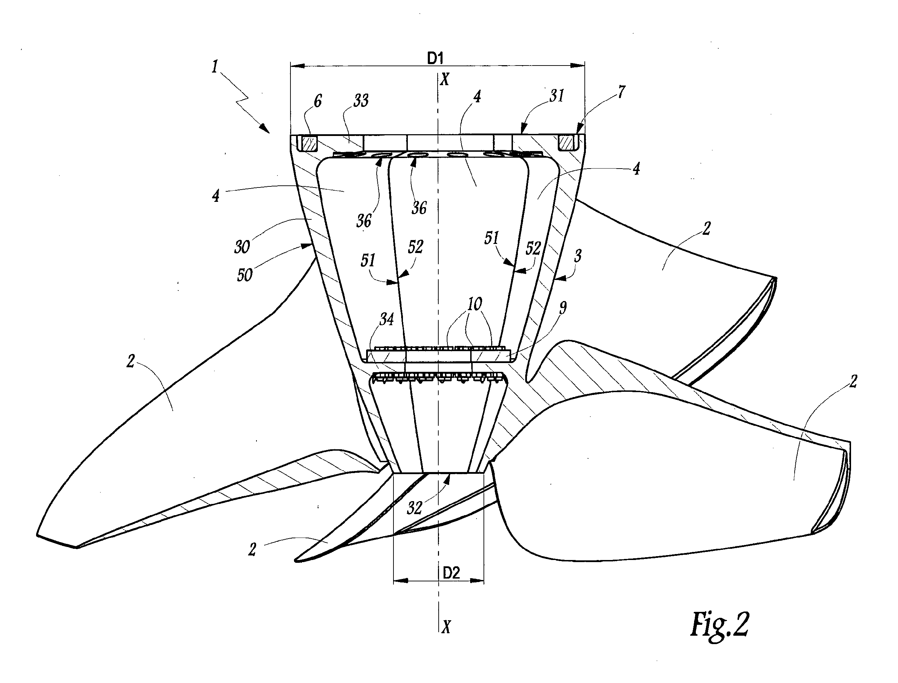

Les figures 1 et 2 montrent une hélice 1 destinée à équiper une machine hydraulique non représentée telle qu'une turbine, une pompe ou une turbine-pompe. En service, un écoulement provenant d'une conduite non représentée traverse l'hélice 1 qui tourne alors autour d'un axe central X-X.

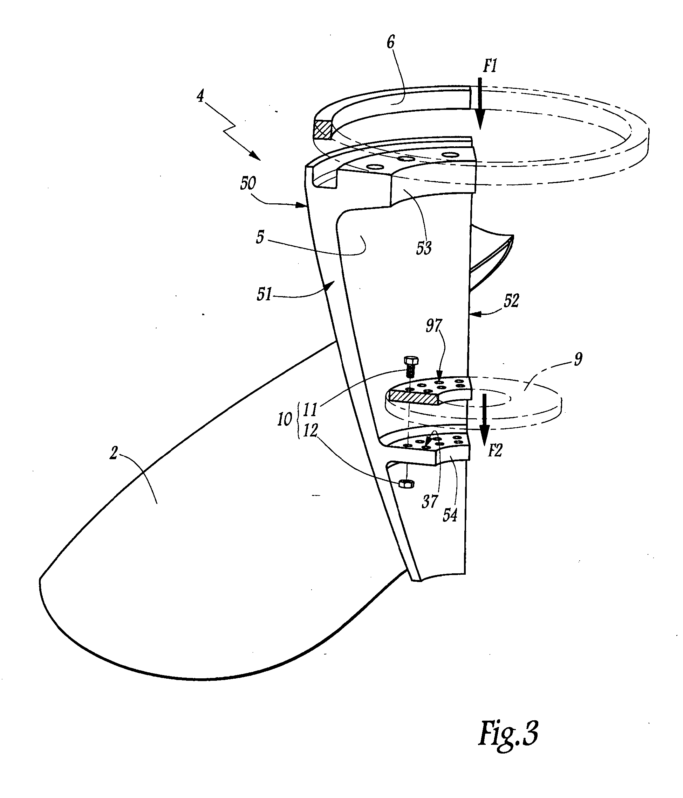

L'hélice 1 comprend cinq pales 2 de forme hélicoïdale qui sont réparties régulièrement autour de l'axe X-X et qui s'étendent à partir d'un moyeu 3 central de l'hélice 1. Le moyeu 3 est creux et s'étend le long de l'axe X-X. Le moyeu 3 est globalement en forme de portion de cône d'axe X-X. L'hélice 1 est fabriquée en assemblant cinq secteurs 4 identiques dont l'un est représenté à la figure 3. Chaque secteur 4, dont la géométrie est détaillée plus en détail par la suite, se compose d'un corps 5 solidaire d'une pale 2. Le corps 5 est destiné à constituer une partie du moyeu 3, après assemblage de l'hélice 1.

Chaque secteur 4 peut être monobloc, c'est-à-dire constitué d'une seule pièce, et fabriqué par moulage. En alternative, le corps 5 et la pale 2 de chaque secteur 4 sont fabriqués séparément, par exemple moulés, forgés ou usinés, et ensuite assemblés, par exemple par soudage.

Dans ce qui suit, on qualifie de « radiale » une direction qui est perpendiculaire à l'axe X-X et qui passe par l'axe X-X. Les surfaces perpendiculaires à une direction radiale, par exemple les surfaces cylindriques d'axe X-X à section circulaire, et, par extension, les surfaces présentant une symétrie axiale autour de l'axe X-X, par exemple les surfaces coniques, sont qualifiées de surfaces « radiales ».

Le moyeu 3 présente une première extrémité axiale 31 de diamètre extérieur D1 et une seconde extrémité axiale 32 dont le diamètre extérieur D2 est inférieur au diamètre D1. En service, la première extrémité 31 est tournée du côté amont de l'écoulement et la seconde extrémité 32 est tournée du côté aval. Cette orientation est valable pour une utilisation de l'hélice 1 en mode turbine et en mode pompe. Le diamètre D1 correspond au diamètre maximum du moyeu 3, entre les extrémités axiales 31 et 32. On note 30, une paroi latérale radiale du moyeu 3 qui s'étend entre les extrémités 31 et 32. La paroi radiale 30 est axisymétrique, c'est-à-dire qu'elle présente une symétrie de révolution autour de l'axe X-X.

La paroi radiale 30, au niveau de la première extrémité 31 du moyeu 3, se prolonge radialement vers l'intérieur du moyeu 3, c'est-à-dire vers l'axe X-X, par une première paroi 33 annulaire perpendiculaire à l'axe X-X. Des trous 36 sont percés dans la première paroi 33 pour assembler, par exemple au moyen de boulons, l'hélice 1 à un arbre de transmission qui est un arbre d'entrée ou de sortie en fonction du type de la machine hydraulique. Une rainure 7 annulaire dont le fond est perpendiculaire à l'axe X-X et dont les parois latérales sont parallèles à l'axe X-X est creusée dans la première paroi 33. La rainure 7 s'étend dans un plan perpendiculaire à l'axe X-X. La forme extérieure de la paroi radiale 30 est obtenue en faisant tourner un segment légèrement courbe autour de l'axe X-X.

Une seconde paroi 34 annulaire du moyeu 3, perpendiculaire à l'axe X-X, fait saillie à l'intérieur du moyeu 3 en direction de l'axe X-X. La seconde paroi 34 est située à environ à un tiers de la hauteur du moyeu 3 mesurée selon l'axe X-X, du côté de la seconde extrémité 31 mais en variante la seconde paroi 34 peut être décalée vers l'extrémité 31 ou 32 du moyeu 3. Des trous 37, plus particulièrement visibles sur le secteur 4 de la figure 3, sont percés dans la paroi 34 et sont réalisés selon deux contours circulaires concentriques. Comme expliqué plus en détail par la suite, la seconde paroi 34 constitue un plateau de fixation.

Comme le montre la figure 3, chaque corps 5 a la forme d'une portion de cône qui s'étend sur 72°, entre un premier bord latéral 51 et un second bord latéral 52 du corps 5.

Les bords latéraux 51 et 52 sont plans, et une fois l'hélice 1 assemblée, ces plans sont orientés radialement, c'est-à-dire qu'ils sont parallèles à l'axe X-X et passent par l'axe X-X. En variante, les bords latéraux 51 et 52 peuvent avoir une géométrie quelconque, par exemple courbes et en forme de spirale, dans la mesure où, une fois les secteurs 4 assemblés, les bords 51 et 52 des secteurs 4 sont en contact les uns avec les autres.

On note 50, une paroi latérale radiale du corps 5 de chaque secteur 4. Chaque corps 5 est prolongé vers l'axe X-X par une première projection 53 et une seconde projection 54 qui, une fois les secteurs 4 assemblés, constituent ensemble respectivement la première paroi 33 et la seconde paroi 34 du moyeu 3.

La suite de la description concerne une méthode d'assemblage de l'hélice 1 au moyen d'une bague 6 et d'une rondelle 9. A la figure 3, les portions de la bague 6 et de la rondelle 9 qui, une fois les secteurs 4 assemblés, ne sont pas en contact avec le secteur 4 de la figure 3 sont représentées en traits d'axe. La bague 6 est à section rectangulaire et elle est logée dans la rainure 7. La rondelle 9 est percée de trous 97 réalisés selon deux contours circulaires concentriques qui correspondent aux trous 37 de la deuxième paroi 34. En variante, le nombre de contours circulaires peut être supérieur ou inférieur à deux.

Dans une première étape d'assemblage, la bague 6 est frettée. Pour ce faire, la bague 6 est chauffée et se dilate. Puis, la bague 6 est insérée dans la rainure 7, ce que représente la flèche F1 à la figure 3. Lorsque la bague 6 refroidit, son diamètre diminue et la bague 6 serre entre eux les secteurs 4 au niveau des projections 53 qui sont en appui les unes contre les autres pour constituer la première paroi 33, ce qui les maintient en position. L'effort résultant du frettage de la bague 6 est perpendiculaire à l'axe X-X et est encaissé par la première paroi 33 ainsi que par les bords latéraux 51 et 52. On observe que le diamètre externe de la rainure 7 est supérieur au diamètre externe de la bague 6, ce qui permet la mise en place de la bague 6 dans la rainure 7 lorsque la bague 6 est dilatée par la chaleur.

Dans une deuxième étape d'assemblage, la rondelle 9 est assemblée à la deuxième projection 54 de chaque secteur 4 au moyen de boulons 10 comprenant chacun une vis 11 qui coopère avec un des trous 37 des deuxièmes projections 54, avec un des trous 97 de la rondelle et avec un écrou 12. A la figure 3, un seul boulon 10 est représenté, étant entendu que d'autres boulons 10, en pratique, coopèrent avec chacun des trous 37 et 97. La mise en place de la rondelle 9 sur les différentes projections 54, du côté de l'extrémité 31 du moyeu 3, est représentée par la flèche F2 à la figure 3. En variante, la rondelle 9 peut être mise en place sur l'autre face des projections 54, c'est-à-dire du côté de l'extrémité 32 du moyeu 3. Le serrage des écrous 12 de chaque boulon 10 permet de régler la force de friction entre la rondelle 9 et les deuxièmes projections 54 pour le contrôle de l'assemblage. La rondelle 9 constitue ainsi un élément d'assemblage des secteurs 4.

Une fois l'assemblage de l'hélice 1 réalisé, le premier bord latéral 51 et le second bord latéral 52 de la paroi latérale 50 du corps 5 de chaque secteur 4 est respectivement en contact avec le second bord latéral 52 et le premier bord latéral 51 des deux secteurs 4 adjacents.

De manière connue, le frettage n'est pas approprié pour des moyeux de petit diamètre car le diamètre de la bague est alors trop faible pour que sa dilatation soit suffisante et permette sa mise en place autour des secteurs, tout en assurant un effort de serrage suffisant. D'autre part, dans le cas des moyeux de petit diamètre, la géométrie de l'extrémité aval du moyeu ne permet pas en général l'installation d'une frette, pour des problèmes d'encombrement.

L'assemblage des secteurs 4 au moyen de la bague 6 et de la rondelle 9 est particulièrement adapté pour des hélices 1 de forme conique ou globalement conique puisque la bague 6 est frettée au niveau de la première extrémité 31 qui est l'extrémité de grand diamètre. L'invention autorise une conicité du moyeu 3 relativement importante puisque la seconde extrémité 32 du moyeu 3, qui est l'extrémité de petit diamètre, n'est pas frettée. Ainsi, grâce à l'invention, le diamètre D2, est relativement faible, ce qui permet de réduire l'encombrement du moyeu 3. De plus, la réduction du diamètre D2 a un impact favorable sur le comportement hydraulique de l'hélice 1. Dans le cadre de l'invention, le diamètre D2 de la seconde extrémité 32 peut être nul, auquel cas la seconde extrémité est en forme de pointe.

Par conséquent, grâce à l'invention, un rapport ayant, comme dénominateur, le diamètre D1 et, comme numérateur, le diamètre D2, est relativement faible.

Par ailleurs, l'assemblage de la rondelle 9 sur site est relativement aisé puisqu'il suffit de présenter la rondelle 9 sur les projections 54 puis de mettre en place les boulons 10, sans avoir besoin d'apporter du matériel encombrant et compliqué à mettre en oeuvre. En outre, il n'est pas nécessaire de modifier la géométrie de la paroi radiale 30 du moyeu 3 ni ses dimensions pour fixer la rondelle 9, puisqu'elle est assemblée au moyen des boulons 10 sur la seconde paroi 34 qui est spécialement prévue à cet effet et qui est disposée à l'intérieur du moyeu 3. Par ailleurs, le nombre de secteurs 3 peut être pair ou impair.

Le moyeu 3 est globalement tronconique mais en variante il peut être de géométrie quelconque, par exemple cylindrique à base circulaire ou polygonale, ou conique à section transversale polygonale. Dans ce cas, les diamètres D1 et D2 correspondent à une dimension extérieure radiale ou transversale maximale du moyeu 3, c'est à dire mesurée perpendiculairement à l'axe X-X. Par exemple, dans le cas d'un moyeu à section carrée, la dimension extérieure maximale du moyeu correspond à la diagonale de la section carrée.

En variante, lorsque le moyeu 3 n'est pas tronconique, la rondelle 9 n'est pas en forme d'anneau. Par exemple, la rondelle 9 peut être de forme carrée, hexagonale ou polygonale, en fonction de la forme de la paroi radiale 30 du moyeu 3 et de la seconde paroi 34.

En variante, la rondelle 9 est assemblée à la seconde paroi 34 au moyen de goupilles ou d'une combinaison de boulons et de goupilles. Les goupilles sont enfoncées en force dans les trous 37 et 97 et sont prévues pour encaisser les charges radiales.

En variante, deux rondelles 9 sont utilisées pour l'assemblage de l'hélice 1 et sont assemblées de part et d'autre de la seconde paroi 34. Le nombre de rondelles 9 peut également être supérieur à deux. Ainsi, l'hélice 1 comporte au moins une rondelle 9.

En variante, le corps 5 de chaque secteur 4 comprend deux projections 54 réparties entre la première extrémité 31 et la seconde extrémité 32 du moyeu 3. Dans ce cas, une ou deux rondelles 9 peuvent être employées pour assembler entre elles les projections 54 qui, une fois les secteurs 4 assemblés, constituent ensemble une des deux secondes parois 34.

En variante, certains des secteurs 4 ne comportent pas de pale 2. Par exemple, un secteur 4 sur deux peut ne pas comporter de pale 2.

En variante, l'hélice 1 comporte une ou plusieurs autre(s) bague(s) similaire(s) à la bague 6 et frettée(s) autour des corps 5 des secteurs 4.

En variante, le nombre de secteurs 4 est différent de cinq. Par exemple, l'hélice 1 peut être fabriquée en assemblant entre trois et douze secteurs. Dans ce cas et lorsque les bords 51 et 52 sont plans, chaque corps 5 s'étend sur un secteur angulaire égal à 360° divisé par le nombre de secteurs 4.

En variante, le nombre de pales 2 est différent de cinq.

En variante, la rainure 7 peut être creusée dans la paroi radiale 30, avec ses côtés perpendiculaires à l'axe X-X. Cependant, la bague 6 est alors exposée à l'eau, ce qui peut contribuer à sa dégradation. De plus, la continuité entre la paroi radiale 30 et la bague 6 risque de ne pas être assurée, et un espacement entre la paroi radiale 30 et la bague 6 risque de se créer, ce qui provoque des tourbillons et de la cavitation. Ces inconvénients sont évités grâce à la disposition de la rainure 7 telle que montrée sur les figures, car l'extrémité de la paroi radiale 30 située du côté de la première extrémité 31 du moyeu 3 protège la bague 6 de l'eau.

Les différents modes de réalisation en variantes décrits ci-dessus peuvent être combinés entre eux, totalement ou partiellement, pour donner d'autres modes de réalisation de l'invention.

## Revendications

1. Hélice (1) pour machine hydraulique, destinée à être traversée par un écoulement, l'hélice (1) comportant un moyeu (3) s'étendant le long d'un axe de rotation (X-X) de l'hélice (1) et des pales (2) s'étendant à partir du moyeu (3), l'hélice (1) étant composée de plusieurs secteurs (4) comportant chacun un corps (5) qui, une fois les secteurs (4) assemblés, constituent ensemble le moyeu (3) et chaque pale (2) étant solidaire du corps (5) d'un secteur (4), les secteurs (4) étant assemblés entre eux pour former l'hélice (1) au moyen d'au moins une bague (6) frettée qui est mise en place autour des corps (5) des secteurs (4), l'hélice (1) étant **caractérisé en ce que** le moyeu (3) est creux, **en ce que** chaque secteur (4) comprend une paroi latérale (50) et une projection (54) qui est solidaire de la paroi latérale (50) et qui fait saillie vers l'intérieur du moyeu (3), perpendiculairement à l'axe (X-X), et **en ce que** les secteurs (4) sont en outre assemblés entre eux pour former l'hélice (1) au moyen d'au moins une rondelle (9) assemblée à la projection (54) de chaque secteur (4), à l'intérieur du moyeu (3), au moyen d'éléments de fixation (10) rapportés.

2. Hélice (1) selon la revendication 1, **caractérisée en ce que** le moyeu (3) est globalement tronconique et présente une première extrémité axiale (31), tournée vers l'amont de l'écoulement, et une seconde extrémité axiale (32), tournée vers l'aval de l'écoulement, dont la dimension radiale externe maximale (D2), mesurée perpendiculairement à l'axe (X-X), est inférieure à la dimension radiale externe maximale (D1) de la première extrémité axiale (31).

3. Hélice (1) selon la revendication 2, caractérisée en que la bague (6) est frettée au niveau de la première extrémité axiale (31) du moyeu (3).

4. Hélice (1) selon la revendication 3, **caractérisée en ce que** la première extrémité axiale (31) du moyeu (3) est prolongée vers l'axe (X-X) par une paroi (33) qui comprend une rainure (7) de réception de la bague (6), la rainure (7) s'étendant dans un plan perpendiculaire à l'axe (X-X).

5. Hélice (1) selon l'une des revendications précédentes, **caractérisée en ce que** les éléments de fixation (10) sont constitués par des boulons et/ou des goupilles.

6. Hélice (1) selon l'une des revendications précédentes, **caractérisée en ce que** les secteurs (4) sont monobloc, notamment fabriqués par moulage.

7. Hélice (1) selon l'une des revendications 1 à 5, **caractérisé en ce que** les secteurs (4) sont fabriqués en assemblant une des pales (2) à un des corps (5), notamment par soudage.

8. Machine hydraulique, **caractérisée en ce qu'**elle est équipée d'une hélice (1) selon l'une des revendications précédentes.

9. Méthode d'assemblage d'une hélice (1) selon l'une des revendications 1 à 7, **caractérisé en ce qu'**elle comprend des étapes dans lesquelles :
- la bague (6) est frettée (F1) autour du corps (5) de chaque secteur (4),
- au moins une rondelle (9) est assemblée (F2) à la projection (54) de chaque secteur (4).

10. Méthode d'assemblage selon la revendication 9 **caractérisée en ce qu'**au moins une rondelle (9) est assemblée à la projection (54) de chaque secteur au moyen d'éléments de fixation (10) rapportés, notamment des boulons et/ou des goupilles.

## Patentansprüche

1. Propeller (1) für eine Hydraulikmaschine, der dazu bestimmt ist, von einer Strömung durchquert zu werden, wobei der Propeller (1) eine sich entlang einer Drehachse (X-X) des Propellers (1) erstreckende Nabe (3) und sich ausgehend von der Nabe (3) erstreckende Blätter (2) aufweist, wobei der Propeller (1) aus mehreren Sektoren (4) besteht, die je einen Körper (5) aufweisen, die, wenn die Sektoren (4) zusammengebaut sind, zusammen die Nabe (3) bilden, und jedes Blatt (2) fest mit dem Körper (5) eines Sektors (4) verbunden ist, wobei die Sektoren (4) mittels mindestens eines aufgeschrumpften Rings (6), der um die Körper (5) der Sektoren (4) herum eingesetzt wird, miteinander verbunden werden, um den Propeller (1) zu bilden, wobei der Propeller (1) **dadurch gekennzeichnet ist, dass** die Nabe (3) hohl ist, dass jeder Sektor (4) eine Seitenwand (50) und einen Vorsprung (54) enthält, der fest mit der Seitenwand (50) verbunden ist und ins Innere der Nabe (3) lotrecht zur Achse (X-X) vorsteht, und dass die Sektoren (4) außerdem zur Bildung des Propellers (1) mittels mindestens einer Scheibe (9) miteinander verbunden werden, die mit dem Vorsprung (54) jedes Sektors (4) im Inneren der Nabe (3) mittels angefügter Befestigungselemente (10) verbunden wird.

2. Propeller (1) nach Anspruch 1, **dadurch gekennzeichnet, dass** die Nabe (3) global kegelstumpfförmig ist und ein erstes axiales Ende (31), das zur stromaufwärtigen Seite der Strömung weist, und ein zweites axiales Ende (32) hat, das zur stromabwärtigen Seite der Strömung weist, dessen maximale äußere radiale Abmessung (D2), gemessen lotrecht zur Achse (X-X), geringer als die maximale äußere radiale Abmessung (D1) des ersten axialen Endes (31) ist.

3. Propeller (1) nach Anspruch 2, **dadurch gekennzeichnet, dass** der Ring (6) im Bereich des ersten axialen Endes (31) der Nabe (3) aufgeschrumpft ist.

4. Propeller (1) nach Anspruch 3, **dadurch gekennzeichnet, dass** das erste axiale Ende (31) der Nabe (3) zur Achse (X-X) hin durch eine Wand (33) verlängert wird, die eine Rille (7) zur Aufnahme des Rings (6) enthält, wobei die Rille (7) sich in einer Ebene lotrecht zur Achse (X-X) erstreckt.

5. Propeller (1) nach einem der vorhergehenden Ansprüche, **dadurch gekennzeichnet, dass** die Befestigungselemente (10) aus Bolzen und/oder Stiften bestehen.

6. Propeller (1) nach einem der vorhergehenden Ansprüche, **dadurch gekennzeichnet, dass** die Sektoren (4) einstückig sind, insbesondere durch Formguss hergestellt werden.

7. Propeller (1) nach einem der Ansprüche 1 bis 5, **dadurch gekennzeichnet, dass** die Sektoren (4) hergestellt werden, indem eines der Blätter (2) an einen der Körper (5) insbesondere durch Schweißen angefügt wird.

8. Hydraulikmaschine, **dadurch gekennzeichnet, dass** sie mit einem Propeller (1) nach einem der vorhergehenden Ansprüche ausgestattet ist.

9. Montageverfahren eines Propellers (1) nach einem der Ansprüche 1 bis 7, **dadurch gekennzeichnet, dass** es Schritte enthält, in denen:
- der Ring (6) um den Körper (5) jedes Sektors (4) aufgeschrumpft wird (F1),
- mindestens eine Scheibe (9) mit dem Vorsprung (54) jedes Sektors (4) verbunden wird (F2).

10. Zusammenbauverfahren nach Anspruch 9, **dadurch gekennzeichnet, dass** mindestens eine Scheibe (9) mit dem Vorsprung (54) jedes Sektors mittels angefügter Befestigungselemente (10) verbunden wird, insbesondere Bolzen und/oder Stifte.

## Claims

1. Propeller (1) for a hydraulic machine, through which a flow is designed to pass, the propeller (1) comprising a hub (3) which extends along an axis of rotation (X-X) of the propeller (1) and blades (2) which extend from the hub (3), the propeller (1) consisting of multiple sectors (4) each comprising a body (5) which, once the sectors (4) are connected, together constitute the hub (3) and each blade (2) being secured to the body (5) of a sector (4), the sectors (4) being connected to one another, so as to form the propeller (1), by means of at least one shrink-fitted ring (6) which is put in place around the bodies (5) of the sectors (4), the propeller (1) being **characterized in that** the hub (3) is hollow, **in that** each sector (4) comprises a side wall (50) and a projection (54) which is secured to the side wall (50) and projects inwards into the hub (3), perpendicular to the axis (X-X), and **in that** the sectors (4) are moreover connected to one another, so as to form the propeller (1), by means of at least one attachment ring (9) connected to the projection (54) of each sector (4), inside the hub (3), by means of added-on attachment elements (10).

2. Propeller (1) according to Claim 1, **characterized in that** the hub (3) is generally frustoconical and has a first, upstream, axial end (31) and a second, downstream, axial end (32), wherein the maximum outer radial dimension (D2), measured perpendicular to the axis (X-X), of the second axial end is smaller than the maximum outer radial dimension (D1) of the first axial end (31).

3. Propeller (1) according to Claim 2, **characterized in that** the ring (6) is shrink-fitted at the first axial end (31) of the hub (3).

4. Propeller (1) according to Claim 3, **characterized in that** a wall (33) comprising a groove (7) for receiving the ring (6) extends from the first axial end (31) of the hub (3) towards the axis (X-X), the groove (7) extending in a plane perpendicular to the axis (X-X).

5. Propeller (1) according to one of the preceding claims, **characterized in that** the attachment elements (10) consist of bolts and/or pins.

6. Propeller (1) according to one of the preceding claims, **characterized in that** the sectors (4) are manufactured as a single piece, in particular by casting.

7. Propeller (1) according to one of Claims 1 to 5, **characterized in that** the sectors (4) are manufactured by connecting one blade (2) to one body (5), in particular by welding.

8. Hydraulic machine, **characterized in that** it is equipped with a propeller (1) according to one of the preceding claims.

9. Method for assembling a propeller (1) according to one of Claims 1 to 7, **characterized in that** it comprises steps in which:
- the ring (6) is shrink-fitted (F1) around the body (5) of each sector (4),
- at least one attachment ring (9) is connected (F2) to the projection (54) of each sector (4).

10. Assembly method according to Claim 9, **characterized in that** at least one attachment ring (9) is connected to the projection (54) of each sector by means of added-on attachment elements (10), in particular bolts and/or pins.
